# EUROPEAN PATENT APPLICATION

(11) **EP 4 687 126 A1**
(43) Date of publication of application: **04.02.2026**
(21) Application number: 25188483.9
(22) Date of filing: 09.07.2025
(51) Int. Cl.: G07C 9/00, B60R 25/24, B60R 25/20, H04L 9/08

(54) **MANAGEMENT SERVER, MANAGEMENT METHOD, AND PROGRAM**

(30) Priority: 31.07.2024 JP 2024125149
(71) Applicant: TOYOTA JIDOSHA KABUSHIKI KAISHA, Toyota-shi, Aichi-ken 471-8571 (JP)
(72) Inventor: KOBAYASHI, Junya, Toyota-shi, 471-8571 (JP); HOMMA, Hiroki, Toyota-shi, 471-8571 (JP); HASEGAWA, Yosuke, Ohguchi-cho, 480-0195 (JP); MURASE, Junji, Ohguchi-cho, 480-0195 (JP); MORI, Yuki, Ohguchi-cho, 480-0195 (JP)
(74) Representative: J A Kemp LLP

(57) **Abstract**

A management server manages multiple digital keys available for a vehicle. The multiple digital keys include a target digital key and one or more registration-involved digital keys that have been involved in registration of the target digital key. The multiple digital keys are respectively registered in multiple devices. The multiple devices include an involved device to which a predetermined one of the registration-involved digital keys is registered. The management server performs determining whether to apply a prescribed condition to deletion of the target digital key based on a user attribute of the involved device, and setting the target digital key to an unusable state in accordance with a result of the determination.

## Description

### CROSS-REFERENCE TO RELATED APPLICATIONS

This application is based upon and claims the benefit of priority from Japanese Patent Application No. 2024-125149, filed on July 31, 2024, the entire contents of which are incorporated herein by reference.

### BACKGROUND

### 1. Field

The present disclosure relates to a management server, a management method, and a program.

### 2. Description of Related Art

Japanese Laid-Open Patent Publication No. 2024-001720 describes a digital key management system. The management system includes a vehicle, multiple devices, and a management server. Multiple digital keys available for the vehicle are registered in multiple devices, respectively. When a digital key is used, the vehicle authenticates the digital key and permits control such as unlocking of the vehicle.

The management server described in the above publication manages multiple digital keys for the same vehicle in some cases. In managing a target digital key, the management server may set the target digital key to an unusable state on the condition that a prescribed condition for deletion of the target digital key is met. However, depending on how the vehicle is used, it may be desirable to set the target digital key to an unusable state regardless of whether the prescribed condition for deletion of the target digital key is met.

### SUMMARY

This Summary is provided to introduce a selection of concepts in a simplified form that are further described below in the Detailed Description. This Summary is not intended to identify key features or essential features of the claimed subject matter, nor is it intended to be used as an aid in determining the scope of the claimed subject matter.

In one general aspect, a management server is configured to manage multiple digital keys available for a vehicle. The multiple digital keys include a target digital key and one or more registration-involved digital keys that have been involved in registration of the target digital key. The multiple digital keys are respectively registered in multiple devices. The multiple devices include an involved device to which a predetermined one of the registration-involved digital keys is registered. The management server is configured to perform: determining whether to apply a prescribed condition to deletion of the target digital key based on a user attribute of the involved device. The management server is also configured to perform setting the target digital key to an unusable state in accordance with a result of the determination

In another general aspect, a management method is performed by a management server configured to manage multiple digital keys available for a vehicle. The multiple digital keys include a target digital key and one or more registration-involved digital keys that have been involved in registration of the target digital key. The multiple digital keys are respectively registered in multiple devices. The multiple devices include an involved device to which a predetermined one of the registration-involved digital keys is registered. The management method includes determining whether to apply a prescribed condition to deletion of the target digital key based on a user attribute of the involved device; and setting the target digital key to an unusable state in accordance with a result of the determination.

In a further general aspect, a program is executed by a management server that is a computer configured to manage multiple digital keys available for a vehicle. The multiple digital keys include a target digital key and one or more registration-involved digital keys that have been involved in registration of the target digital key. The multiple digital keys are respectively registered in multiple devices. The multiple devices include an involved device to which a predetermined one of the registration-involved digital keys is registered. The program is configured to cause the management server to perform: determining whether to apply a prescribed condition to deletion of the target digital key based on a user attribute of the involved device; and setting the target digital key to an unusable state in accordance with a result of the determination.

Other features and aspects will be apparent from the following detailed description, the drawings, and the claims.

### BRIEF DESCRIPTION OF THE DRAWINGS

Fig. 1 is a schematic diagram showing a management system according to an embodiment.
Fig. 2 is a schematic diagram showing owner key information of the owner device shown in Fig. 1.
Fig. 3 is a schematic diagram showing shareable key information of each shareable device of Fig. 1.
Fig. 4 is a schematic diagram showing the device-to-device relationship of data in the database shown in Fig. 1.
Fig. 5 is a schematic diagram showing information indicating user attributes of data in the database shown in Fig. 1.
Fig. 6 is an explanatory diagram showing a series of processes executed by the management system shown in Fig. 1 when an owner key is registered.
Fig. 7 is an explanatory diagram showing a series of processes executed by the management system of Fig. 1 when a friend key is registered.
Fig. 8 is an explanatory diagram showing a series of processes executed by the management system of Fig. 1 when a guest key is registered.
Fig. 9 is a schematic diagram showing a device that is a server.
Fig. 10 is an explanatory diagram showing a series of processes executed by the management system shown in Fig. 1 when an owner key is registered in a device that is a server.
Fig. 11 is an explanatory diagram showing a series of processes executed by the management system shown in Fig. 1 when a friend key is registered in a device that is a server.
Fig. 12 is an explanatory diagram showing a series of processes executed by the management system of Fig. 1 when a guest key is deleted in response to a request from a friend device.
Fig. 13 is a flowchart showing detailed processes of pending deletion determination performed by the management server shown in Fig. 1.
Fig. 14 is an explanatory diagram showing a series of processes executed by the management system of Fig. 1 when a guest key is deleted in response to a request from a guest device.

Throughout the drawings and the detailed description, the same reference numerals refer to the same elements. The drawings may not be to scale, and the relative size, proportions, and depiction of elements in the drawings may be exaggerated for clarity, illustration, and convenience.

### DETAILED DESCRIPTION

This description provides a comprehensive understanding of the methods, apparatuses, and/or systems described. Modifications and equivalents of the methods, apparatuses, and/or systems described are apparent to one of ordinary skill in the art. Sequences of operations are exemplary, and may be changed as apparent to one of ordinary skill in the art, with the exception of operations necessarily occurring in a certain order. Descriptions of functions and constructions that are well known to one of ordinary skill in the art may be omitted.

Exemplary embodiments may have different forms, and are not limited to the examples described. However, the examples described are thorough and complete, and convey the full scope of the disclosure to one of ordinary skill in the art.

In this specification, "at least one of A and B" should be understood to mean "only A, only B, or both A and B."

A management server 70 according to an embodiment will now be described with reference to the drawings.

### Overview of Management System

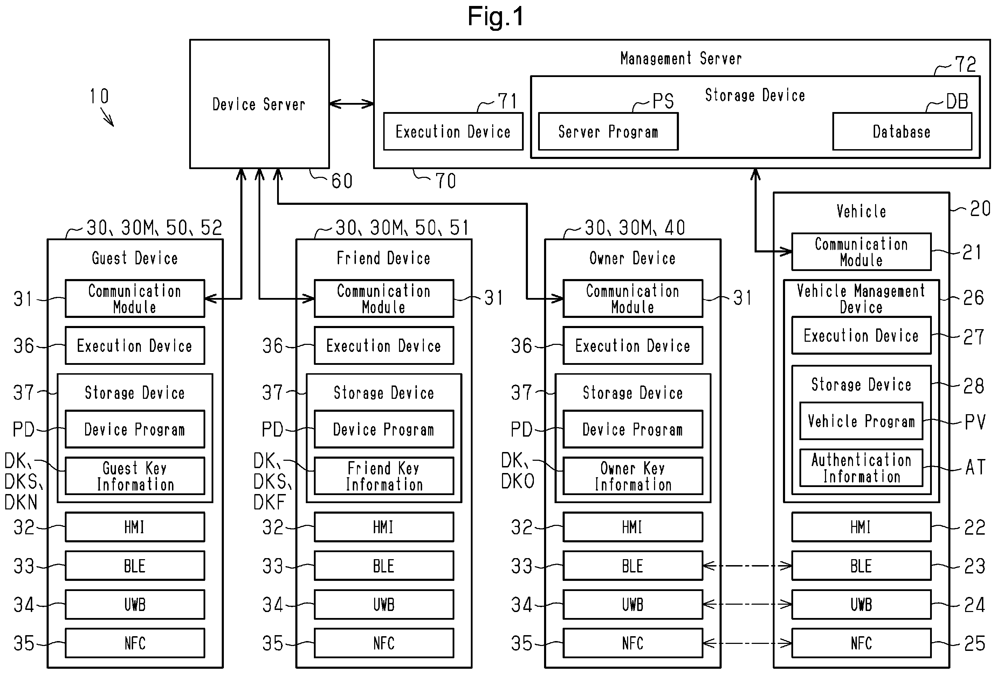

As shown in Fig. 1, a management system 10 manages multiple digital keys available for a target vehicle 20. Standards for digital keys have been established by the Car Connectivity Consortium (CCC). The digital key-related aspects in the present embodiment are based on compliance with the CCC standard. However, they are also applicable to standards and systems other than CCC standard. The management system 10 includes multiple vehicles 20, multiple devices 30, a device server 60, and a management server 70. In Fig. 1, only one vehicle 20 is shown, and the other vehicles 20 are not shown.

Each vehicle 20 includes a communication module 21, a Human Machine Interface (HMI) 22, a Bluetooth Low Energy (BLE) module 23, an Ultra Wide Band (UWB) module 24, a Near Field Communication (NFC) module 25, and a vehicle management device 26.

The communication module 21 communicates with the management server 70 via a wireless communication network. The HMI 22 includes an input device, which undergoes input operations performed by the user of the vehicle 20, and an output device, which presents information to the user. The output device is, for example, a monitor and a speaker.

The BLE module 23 performs short-range wireless communication with the devices 30 via BLE communication. The UWB module 24 communicates with the devices 30 via UWB communication. The UWB module 24 measures the distance between the devices 30 and the vehicle 20. The NFC module 25 performs short-range wireless communication with the devices 30 via NFC communication.

The vehicle management device 26 is mounted on the vehicle 20. The vehicle management device 26 manages the digital keys of the vehicle 20. The vehicle management device 26 is, for example, a digital key ECU. The vehicle management device 26 includes an execution device 27 and a storage device 28. The storage device 28 stores a vehicle program PV and authentication information AT, which is information related to digital keys. The vehicle program PV is executed by the execution device 27 to cause the execution device 27 to store and delete the authentication information AT. The authentication information AT is information for authenticating a digital key so that the vehicle 20 can be controlled using the digital key when the digital key is used. The authentication information AT is provided for each digital key to be authenticated. The execution device 27 is a CPU. The execution device 27 executes the vehicle program PV to execute processes related to storage and deletion of the authentication information AT.

When the vehicle management device 26 authenticates the digital key, the vehicle management device 26 enables control of the vehicle 20 using the authenticated digital key. For example, upon authentication of the digital key, the vehicle management device 26 enables unlocking of the vehicle 20. In another example, upon authentication of the digital key, the vehicle management device 26 enables starting of the vehicle 20.

The devices 30 include a portable device 30M and a prescribed server 30N. That is, the device type indicating the category of each device 30 includes a portable device 30M and a prescribed server 30N. In the example shown in Fig. 1, the devices 30 are all portable devices 30M.

The portable devices 30M are, for example, smartphones or smartwatches. The portable devices 30M perform short-range wireless communication with the vehicle 20.

Each portable device 30M includes a communication module 31, an HMI 32, a BLE module 33, a UWB module 34, an NFC module 35, an execution device 36, and a storage device 37.

The communication module 31 communicates with the device server 60 via a wireless communication line. The HMI 32 includes an input device, which undergoes input operations performed by the user of the device 30, and an output device, which presents information to the user. The output device is, for example, a monitor and a speaker.

The BLE module 33 performs short-range wireless communication with the vehicles 20 via BLE communication. The UWB module 34 communicates with the vehicle 20 via UWB communication. The NFC module 35 performs short-range wireless communication with the vehicles 20 via NFC communication.

The storage device 37 stores a device program PD and key information DK, which is information related to digital keys. The device program PD is executed by the execution device 36 to cause the execution device 36 to store and delete the key information DK. The key information DK is information indicating digital keys.

The device program PD includes, for example, a device application and a digital key framework. The device application is an application for storing and deleting the key information DK. The digital key framework is a program that provides functions of pairing of the portable devices 30M and sharing of digital keys by using an API prepared in the OS. The execution device 36 executes the device program PD to execute processes related to storage and deletion of the key information DK.

The multiple devices 30 include an owner device 40 and shareable devices 50. The owner device 40 stores owner key information DKO indicating the owner key KO as the key information DK. Only one owner key KO is allowed to be registered in a single vehicle 20. Therefore, there is only one owner key KO for each vehicle 20.

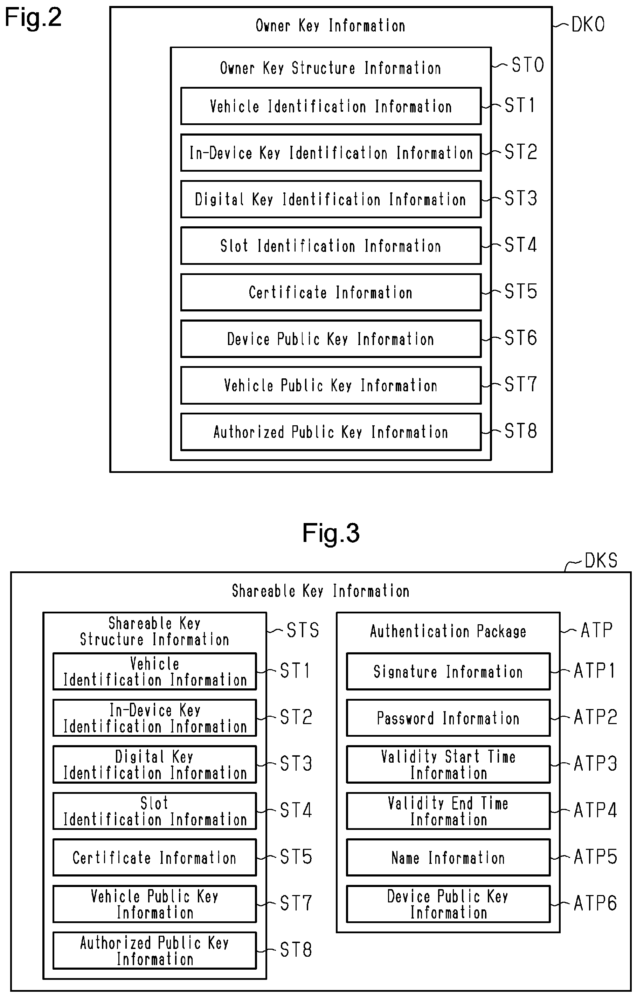

As shown in Fig. 2, the owner key information DKO includes owner key structure information STO. The owner key structure information STO includes vehicle identification information ST1, in-device key identification information ST2, digital key identification information ST3, and slot identification information ST4. The owner key structure information STO further includes certificate information ST5, device public key information ST6, vehicle public key information ST7, and authorized public key information ST8.

The vehicle identification information ST1 is information used to identify the vehicle 20 for which digital keys are assigned. For example, the vehicle identification information ST1 is the ID of a vehicle 20.

The in-device key identification information ST2 is used for management of digital keys in the device 30. The in-device key identification information ST2 is information used to identify digital keys in the application of the device 30.

The digital key identification information ST3 is used for management of digital keys in the management server 70. The slot identification information ST4 is information used to identify digital keys locally within the devices 30.

The certificate information ST5 indicates a certificate that authenticates digital keys. The device public key information ST6 indicates a device public key PKD, which is a public key of the device 30. The device public key PKD in the owner key information DKO indicates the public key of the owner device 40. The vehicle public key information ST7 indicates an in-vehicle public key PKV, which is a public key of the vehicle 20. The authorized public key information ST8 indicates the vehicle public key PKV that has been permitted.

As shown in Fig. 1, the shareable devices 50 each store shareable key information DKS indicating a shareable key KS as the key information DK. Multiple shareable keys KS can be registered in one vehicle 20 when digital keys are registered so as to be usable. That is, multiple shareable keys KS may be associated with a single vehicle 20.

The shareable devices 50 include a friend device 51 and a guest device 52. The friend device 51 stores friend key information DKF indicating a friend key KF as the shareable key information DKS. The guest device 52 stores guest key information DKN indicating a guest key KN as the shareable key information DKS. That is, the types of the shareable keys KS include the friend key KF and the guest key KN. The friend key KF is a shareable key KS that has been registered based on a direct registration request D21 from the owner device 40, as described later. The guest key KN is a shareable key KS that has been registered based on a registration request D31 from the friend device 51, as described later. In other words, the guest key KN is a shareable key KS registered based on an indirect registration request from the shareable device 50 which is a device 30 different from the owner device 40.

A state in which the digital key is registered refers to a state in which the digital key is enabled for use. In a state in which the digital key is registered, the vehicle 20 stores the authentication information AT, and the devices 30 store the key information DK.

As shown in Fig. 3, the shareable key information DKS includes shareable key structure information STS and an authentication package ATP. The shareable key structure information STS includes vehicle identification information ST1, in-device key identification information ST2, digital key identification information ST3, and slot identification information ST4. The shareable key structure information STS includes certificate information ST5, vehicle public key information ST7, and authorized public key information ST8. In other words, the shareable key structure information STS is information obtained by removing the device public key information ST6 from the owner key structure information STO.

The authentication package ATP includes signature information ATP1, password information ATP2, validity start time information ATP3, validity end time information ATP4, name information ATP5, and device public key information ATP6.

The signature information ATP1 indicates that the shareable device 50 is an authorized entity for receiving the digital key. For example, in the case of the friend device 51, the signature information ATP1 indicates a signature by the owner device 40. The signature information ATP1 of the friend devic 51 indicates that the owner device 40 has signed the device public key PKD of the friend device 51 indicated by the device public key information ATP6. Further, for example, in the case of the guest device 52, the signature information ATP1 indicates a signature by the friend device 51. The signature information of the guest device 52 indicates that the friend device 51 has signed the device public key PKD of the guest device 52 indicated by the device public key information ATP6.

The password information ATP2 indicates a pairing password PAS used to establish a secure channel during the pairing between the vehicle 20 and the owner device 40. The validity start time information ATP3 indicates the earliest date and time at which the shareable key KS becomes valid for use. The validity end time information ATP4 indicates the latest date and time until which the shareable key KS remains valid for use. The name information ATP5 indicates a name for identifying the shareable key KS. The name information ATP5 is set to an identifiable name for each of the shareable devices 50, for example, by an operation from the owner device 40.

As shown in Fig. 1, the device server 60 relays communication between the devices 30 and the management server 70. The device server 60 is provided for each type of the devices 30. Specifically, the device server 60 used for communication with a first type of device 30 is different from the device server 60 used for communication with a second type of device 30. For example, the type may refer to the model of the device 30, and a separate device server 60 may be provided for each model of the device 30. In another example, the type may refer to the communication line used by the device 30, and a separate device server 60 may be provided for each type of communication line used by the device 30.

Each device server 60 relays communication between the device 30 and the management server 70. This allows the devices 30 of different types to communicate with the management server 70 via the device server 60. Fig. 1 shows only one device server 60.

### Management Server

The management server 70 is configured to manage multiple digital keys. As will be discussed below, the digital keys include a target digital key and a registration-involved digital key that has been involved in registration of the target digital key.

The management server 70 is capable of communicating with the vehicle 20 and multiple devices 30. The management server 70 includes an execution device 71 and a storage device 72. The storage device 72 stores a server program PS and a database DB. The server program PS is executed by the execution device 71 to cause the execution device 71 to register digital keys in the database DB and delete digital keys from the database DB. In other words, the execution device 71 executes the server program PS, so that the management server 70 performs the management method.

The database DB includes information in which, for each of the digital keys, the corresponding vehicle 20 is associated with registered devices 30. The data DA included in the database DB is partitioned by vehicle 20. In a state in which a digital key is registered, the database DB includes information indicating the device 30 storing the key information DK indicating the digital key and information indicating the user attribute UA for each device 30.

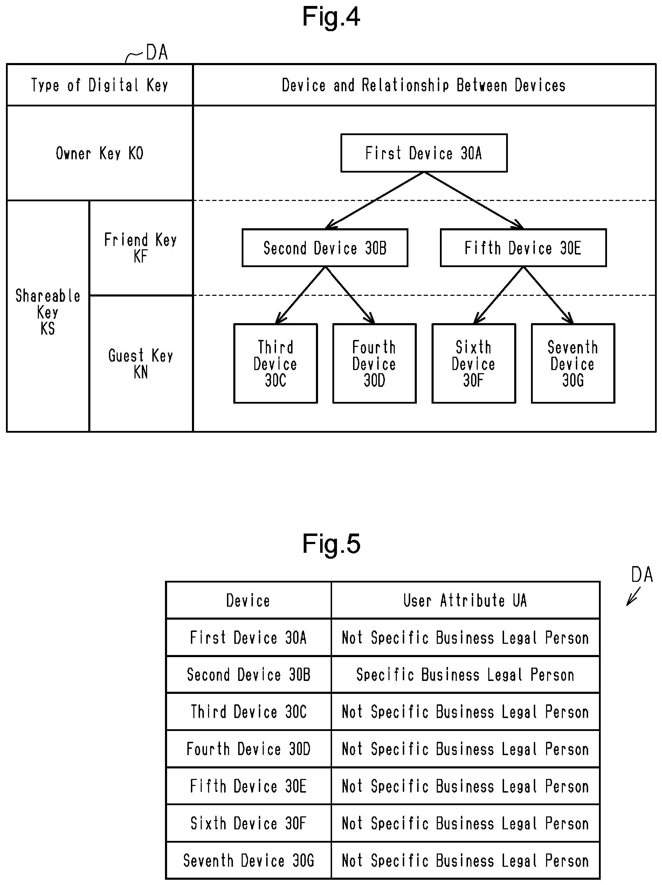

As shown in Fig. 4, the data DA of one vehicle 20 includes information related to the types of digital keys registered in the vehicle 20, the registered devices 30, and the relationship between the registered devices 30. The digital keys are categorized into multiple hierarchical levels according to their respective types. From highest to lowest in the hierarchy, the digital keys are ordered as the owner key KO, the friend key KF, and the guest key KN. Digital keys at higher hierarchical levels are assigned greater authority.

The authority includes, for example, the number of shareable keys KS that may be requested for registration, and the scope of control over the vehicle 20 enabled through authentication of the digital key. Digital keys at higher hierarchical levels are permitted to request registration of a greater number of shareable keys KS. Specifically, for example, the number of friend keys KF that an owner device 40 is permitted to request for registration is greater than the number of guest keys KN that a friend device 51 is permitted to request for registration. Each digital key is permitted to request deletion of digital keys that are lower in hierarchy than itself, but is not permitted to request deletion of digital keys that are higher in hierarchy than itself.

Further, as the hierarchical level of a digital key increases, the scope of control permitted over the vehicle 20 also increases. The control scope over the vehicle 20 refers to the set of controllable functions, such as engine start control of the vehicle 20, power-on control of the vehicle 20, and door unlocking and locking control of the vehicle 20. For example, when the control scope includes all three of the above functions, the control scope is broader than when it includes only door unlocking and locking control of the vehicle 20. Specifically, the control scope of the vehicle 20 permitted by the friend key KF includes all three functions described above, whereas the control scope permitted by the temporary key KN is limited to only the door unlocking and locking control of the vehicle 20.

A state will now be described in which digital keys are registered in seven devices 30 for one vehicle 20. The seven devices 30 are first through seventh devices 30A to 30G. The digital keys respectively registered in the first device 30A to the seventh device 30G are a first key through a seventh key. These pieces of information are included in the data DA.

The device 30 to which the owner key KO is registered as a digital key is the first device 30A. In other words, the first device 30A is the owner device 40. That is, the first key is the owner key KO.

The devices 30 to which the shareable keys KS are registered as digital keys are the second device 30B, the third device 30C, the fourth device 30D, the fifth device 30E, the sixth device 30F, and the seventh device 30G. In other words, the second device 30B, the third device 30C, the fourth device 30D, the fifth device 30E, the sixth device 30F, and the seventh device 30G are the shareable devices 50. In other words, the second key through the seventh key are all shareable keys KS.

Specifically, the devices 30 to which the friend key KF is registered as the shareable key KS are the second device 30B and the fifth device 30E. In other words, the second device 30B and the fifth device 30E are the friend devices 51. The devices 30 to which the guest key KN is registered as the shareable key KS are the third device 30C, the fourth device 30D, the sixth device 30F, and the seventh device 30G. In other words, the third device 30C, the fourth device 30D, the sixth device 30F, and the seventh device 30G are the guest devices 52.

The relationship between the registered devices 30 included in the data DA will now be described. The relationship between the second device 30B and the first device 30A is such that the friend key KF has been registered in the second device 30B in response to a registration request from the first device 30A. In other words, the second key is registered based on the first key. Thus, the first key is involved in the registration of the second key. On the other hand, the third key through the seventh key are not involved in the registration of the second key.

The relationship between the fifth device 30E and the first device 30A is such that the friend key KF has been registered in the fifth device 30E in response to a registration request from the first device 30A. In other words, the fifth key is registered based on the first key. Thus, the first key is involved in the registration of the fifth key. On the other hand, the second key through the fourth key, the sixth key, and the seventh key are not involved in the registration of the fifth key.

The relationship between the third device 30C and the second device 30B is such that the guest key KN has been registered in the third device 30C in response to a registration request from the second device 30B. In other words, the third key is registered based on the second key. Thus, the first key and the second key are involved in the registration of the third key. On the other hand, the fourth key through the seventh key are not involved in the registration of the third key.

The relationship between the fourth device 30D and the second device 30B is such that the guest key KN has been registered in the fourth device 30D in response to the registration request from the second device 30B. In other words, the fourth key is registered based on the second key. Thus, the first key and the second key are involved in the registration of the fourth key. On the other hand, the third key and the fifth key through seventh key are not involved in the registration of the fourth key.

The relationship between the sixth device 30F and the fifth device 30E is such that the guest key KN has been registered in the sixth device 30F in response to a registration request from the fifth device 30E. In other words, the sixth key is registered based on the fifth key. Thus, the first key and the fifth key are involved in the registration of the sixth key. On the other hand, the second key through the fourth key and the seventh key are not involved in the registration of the sixth key.

The relationship between the seventh device 30G and the fifth device 30E is such that the guest key KN has been registered in the seventh device 30G in response to a registration request from the fifth device 30E. In other words, the seventh key is registered based on the fifth key. Thus, the first key and the fifth key are involved in the registration of the seventh key. On the other hand, the second key through the fourth key and the sixth key are not involved in the registration of the seventh key.

As described above, the data DA includes information related to the devices 30 to which the digital keys have been registered. In the data DA, each registered device 30 is associated with information indicating the device 30 that initiated the registration request. The data DA also includes information indicating the digital key on which the registration of each digital key is based. Furthermore, the data DA includes information indicating which digital keys are involved in the registration of each digital key.

In this manner, the digital keys include a target digital key and registration-involved digital keys, which have been involved in the registration of the target digital key. The registration-involved digital keys include a digital key directly involved in the registration of the target digital key and a digital key indirectly involved in the registration of the target digital key. A directly involved digital key is a digital key that served as the basis for the registration of the target digital key. A digital key indirectly involved is a digital key that served as the basis for the registration of the digital key that directly served as the basis for the registration of the target digital key. In the present embodiment, among the digital keys involved in registration, the device to which the digital key that was directly involved in the registration is registered is referred to as the involved device.

As shown in Fig. 5, the data DA of each vehicle 20 includes information indicating the user attribute UA of each registered device 30. Specifically, the data DA includes information indicating whether the user attribute UA for each of the above-mentioned first through seventh devices 30A to 30F indicates a specific business legal person that operates a specific type of business. The specific type of business refers to, for example, a rental car service or a car-sharing service. That is, in the present embodiment, the information indicating the user attribute includes information indicating whether the user is a specific business operator and whether the user is a legal person.

In the example shown in Fig. 5, the user attribute UA of the first device 30A indicates neither the specific business operator nor a legal person. The user attribute UA of the second device 30B indicates both the specific business operator and a legal person. The user attribute UA of the third device 30C indicates neither the specific business operator nor a legal person. The user attribute UA of the fourth device 30D indicates neither the specific business operator nor a legal person. The user attribute UA of the fifth device 30E indicates neither the specific business operator nor a legal person. The user attribute UA of the sixth device 30F indicates neither the specific business operator nor a legal person. The user attribute UA of the seventh device 30G indicates neither the specific business operator nor a legal person.

### Registration of Digital Keys

Next, a series of processes for registering digital keys in the management system 10 will be described. The registration of digital keys includes the registration of the owner key KO, the registration of the friend key KF, and the registration of the guest key KN.

First, a series of processes for registering digital keys when the device 30 is the portable device 30M will be described. The following description explains the overall process from a state in which no digital key is registered to a state in which digital keys are registered. In the following description, processes executed by the execution device 27 are described as processes executed by the vehicle 20. The processes executed by the execution device 36 will be described as processes executed by the device 30. The processes executed by the execution device 71 will be described as processes executed by the management server 70.

### Registration of the Owner Key in a Portable Device

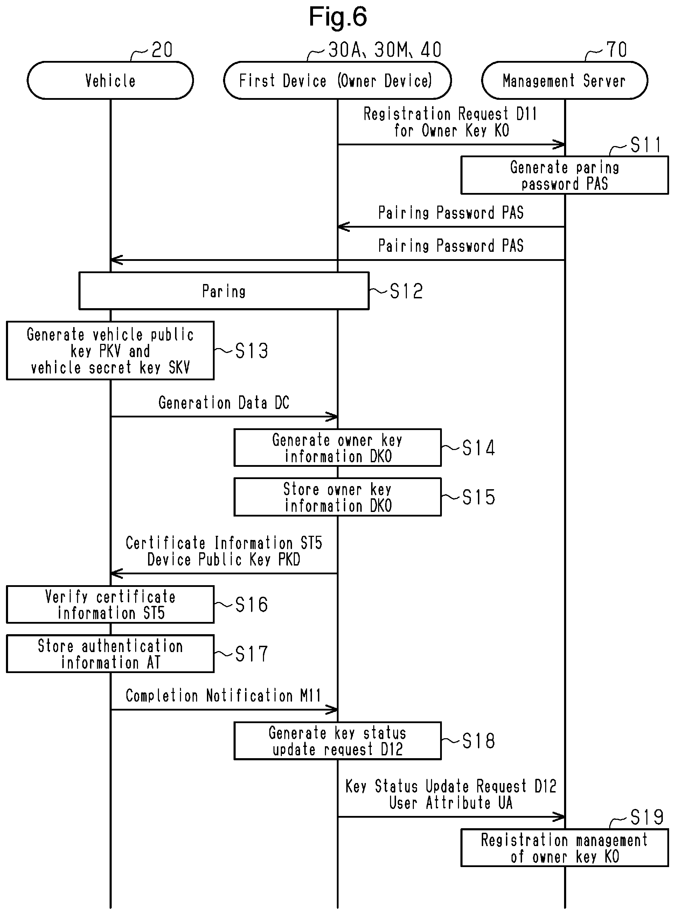

As shown in Fig. 6, the management system 10 executes a series of processes in order to register the owner key KO. The following describes an example of registering the owner key KO to the first device 30A, which does not store the key information DK that indicates the owner key KO.

The management system 10 stores the key information DK indicating the owner key KO in the first device 30A through the registration of the owner key KO. The management system 10 causes the vehicle 20 to store the authentication information AT for authenticating the owner key KO through the registration of the owner key KO. As a result, the first device 30A is configured as the owner device 40. Prior to the registration of the owner key KO, an application required for the registration is preinstalled on the first device 30A.

Upon receiving a registration request D11 for the owner key KO from the first device 30A or the like, the management server 70 executes the process of step S11. In step S11, the management server 70 generates a pairing password PAS. The management server 70 then transmits information indicating the pairing password PAS to the vehicle 20 and the first device 30A.

Thereafter, the vehicle 20 receives the pairing password PAS. After receiving the pairing password PAS, the vehicle 20 is set to a pairing mode via the HMI 22. The vehicle 20 then stands by in a state in which the vehicle 20 can receive the password from the first device 30A. The vehicle 20 then advances the process to step S12.

In step S12, the vehicle 20 performs pairing with the first device 30A. When the pairing is performed, the vehicle 20 establishes a secure channel for data transmission with the first device 30A. The pairing is performed using the pairing password PAS transmitted from the management server 70 to the vehicle 20 and the first device 30A. When the pairing is completed, the vehicle 20 advances the process to step S13.

In step S13, the vehicle 20 generates a vehicle public key PKV, which is a public key of the vehicle 20, and a vehicle secret key SKV, which is a secret key of the vehicle 20. Thereafter, the vehicle 20 transmits generation data DC for generating the owner key KO to the first device 30A via the secure channel. The generation data DC includes the vehicle identification information ST1 and the vehicle public key information indicating the vehicle public key PKV. Then, the first device 30A receives the generation data DC. Thereafter, the first device 30A advances the process to step S14.

In step S14, the first device 30A generates owner key information DKO indicating the owner key KO. Thereafter, the first device 30A advances the process to step S15.

In step S15, the first device 30A stores the owner key information DKO. As a result, the first device 30A is configured as the owner device 40. Subsequently, the first device 30A transmits, to the vehicle 20, the certificate information ST5 related to the owner key KO and the device public key information ST6 indicating the device public key PKD.

Thereafter, upon receiving the certificate information ST5 and the device public key information ST6, the vehicle 20 executes the process of step S16. In step S16, the vehicle 20 verifies the certificate information ST5. When the verification of the certificate information ST5 is completed, the vehicle 20 advances the process to step S17.

In step S17, the vehicle 20 stores the device public key information ST6 indicating the device public key PKD as the authentication information AT. Subsequently, the vehicle 20 transmits a completion notification M11 to the first device 30A, indicating that the storage of the authentication data AT has been completed.

Thereafter, upon receiving the completion notification M11, the first device 30A executes the process of step S18. In step S18, the first device 30A generates a key status update request D12 for the owner key KO. The key status update request D12 is a signal for requesting the management server 70 to update the database DB. The first device 30A transmits the key status update request D12 for the owner key KO and information indicating the user attribute UA of the first device 30A to the management server 70 via the device server 60. In the example shown in Fig. 6, the user attribute UA of the first device 30A does not indicate the specific business legal person.

Thereafter, upon receiving the key status update request D12, the management server 70 executes the process of step S19. In step S19, the management server 70 performs registration management of the owner key KO. Specifically, the management server 70 stores the fact that the device 30 to which the owner key KO is registered is the first device 30A as the data DA of the vehicle 20 in the database DB. The management server 70 stores, in the database DB, the fact that the user attribute UA of the first device 30A is not the specific business legal person as the data DA of the vehicle 20. The management system 10 then terminates the series of processes for registering the owner key KO.

### Registration of the Friend Key in a Portable Device

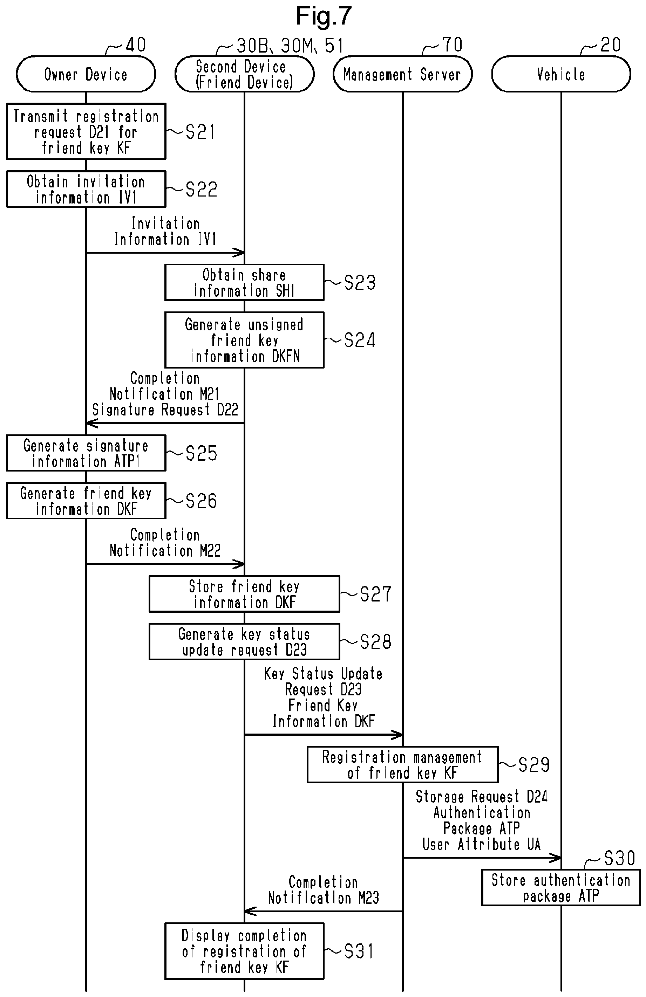

As shown in Fig. 7, the management system 10 executes a series of processes in order to register the friend key KF. The following describes an example of registering the friend key KF in the second device 30B, which does not store the friend key information DKF, through this series of processes.

When an operation for requesting the registration of the friend key KF is performed in the owner device 40, the owner device 40 first executes the process of step S21. In step S21, the owner device 40 transmits a registration request D21 for the friend key KF to a relay server (not shown). Thereafter, the owner device 40 advances the process to step S22.

In step S22, the owner device 40 obtains invitation information IV1 for sharing a digital key from the relay server. The invitation information IV1 is, for example, a URL link. The URL link contains share information SH1 necessary to share the digital key. Thereafter, the owner device 40 transmits the invitation information IV1 to the second device 30B.

Thereafter, upon receiving the invitation information IV1, the second device 30B executes the process of step S23. In step S23, the second device 30B obtains the share information SH1 based on the invitation information IV1. Specifically, the second device 30B downloads the share information SH1 from the source of the URL link.

The share information SH1 includes, for example, the shareable key structure information STS, the password information ATP2, the validity start time information ATP3, the validity end time information ATP4, and the name information ATP5. The validity start time information ATP3, the validity end time information ATP4, and the name information ATP5 are configured by the owner device 40. Thereafter, the second device 30B advances the process to step S24.

In step S24, the second device 30B generates unsigned friend key information DKFN by using the share information SH1. The unsigned friend key information DKFN is friend key information DKF that does not have the signature information ATP1. The unsigned friend key information DKFN includes the obtained share information SH1. Thereafter, the second device 30B transmits a completion notification M21 to the owner device 40, indicating that the upload of the generated unsigned friend key information DKFN to the URL link has been completed. The second device 30B also transmits a signature request D22 to the owner device 40.

Subsequently, the owner device 40 receives the completion notification M21 and the signature request D22 from the second device 30B. Upon receiving the completion notification M21, the owner device 40 obtains the unsigned friend key information DKFN. Upon receiving the signature request D22, the owner device 40 is operated to execute the process of step S25.

In step S25, the owner device 40 generates the signature information ATP1. Specifically, the owner device 40 causes the HMI 32 to present the unsigned friend key information DKFN that has been obtained, and accepts an operation indicating that the user of the owner device 40 has agreed to the registration of the friend key KF. Upon receiving the operation, the owner device 40 generates the signature information ATP1 based on the operation. The owner device 40 then advances the process to step S26.

In step S26, the owner device 40 adds the signature information ATP1 to the unsigned friend key information DKFN. The owner device 40 thus generates the friend key information DKF. Thereafter, the owner device 40 uploads the generated friend key information DKF to the URL link, which is the invitation information IV1. Then, the owner device 40 transmits, to the second device 30B, a completion notification M22 indicating that uploading of the completed friend key information DKF to the URL link has been completed.

Thereafter, the second device 30B obtains the completion notification M22. Then, the second device 30B executes the process of step S27. In step S27, the second device 30B stores the friend key information DKF by downloading it. Thus, the second device 30B is configured as the friend device 51. Thereafter, the second device 30B advances the process to step S28.

In step S28, the second device 30B generates a key status update request D23 for the friend key KF. The second device 30B then transmits, to the management server 70, the friend key information DKF, the key status update request D23 for the friend key KF, and information indicating the user attribute UA of the second device 30B. In the example shown in Fig. 7, the user attribute UA of the second device 30B does not indicate the specific business legal person.

Thereafter, upon receiving the key status update request D23 for the friend key KF, the management server 70 executes the process of step S29. In step S29, the management server 70 performs registration management of the friend key KF.

Specifically, the management server 70 checks that the friend key KF targeted by the key status update request D23 is not listed in a revocation list. The revocation list is a list indicating shareable keys KS, including friend keys KF and guest keys KN, for which deletion requests have already been received. If the friend key KF is listed in the revocation list, the management server 70 transmits a notification to the second device 30B indicating that it cannot respond to the key status update request D23.

On the other hand, when the friend key KF for which the key status update request D23 has been received is not listed in the revocation list, the management server 70 registers the friend key KF for which the key status update request D23 has been received in the database DB. Specifically, the management server 70 stores the fact that the device 30 registered as the friend device 51 is the second device 30B in the data DA of the vehicles 20 in the database DB. The management server 70 stores the relationship between the second device 30B and the owner device 40 by referencing the obtained friend key information DKF. The management server 70 stores, in the database DB, the fact that the user attribute UA of the second device 30B is not the specific business legal person as the data DA of the vehicle 20.

Subsequently, the management server 70 transmits, to the vehicle 20, the authentication package ATP, which is part of the friend key information DKF, along with a storage request D24, which requests the storage of the authentication package ATP. That is, the management server 70 transmits the device public key information ST6, which indicates the device public key PKD of the friend device 51, to the vehicle 20. The management server 70 notifies the vehicle 20 that the device public key PKD has been signed by the owner device 40.

Thereafter, upon receiving the storage request D24 and the authentication package ATP from the management server 70, the vehicle 20 executes the process of step S30. In step S30, the vehicle 20 stores the received authentication package ATP as the authentication information AT for authenticating the friend key KF.

After completing the registration management, the management server 70 transmits a completion notification M23 of the key status update to the second device 30B.

Thereafter, upon receiving the completion notification M23 of the key status update, the second device 30B executes the process of step S31. In the process of step S31, the second device 30B presents information indicating the completion of the registration of the friend key KF on the HMI 32. For example, the second device 30B presents an image indicating the completion of the registration of the friend key KF on the HMI 32. For example, the second device 30B displays an image indicating the completion of the registration of the friend key KF on the HMI 32. As a result, the management system 10 terminates the series of processes for registering the friend key KF.

### Registration of the Guest Key in a Portable Device

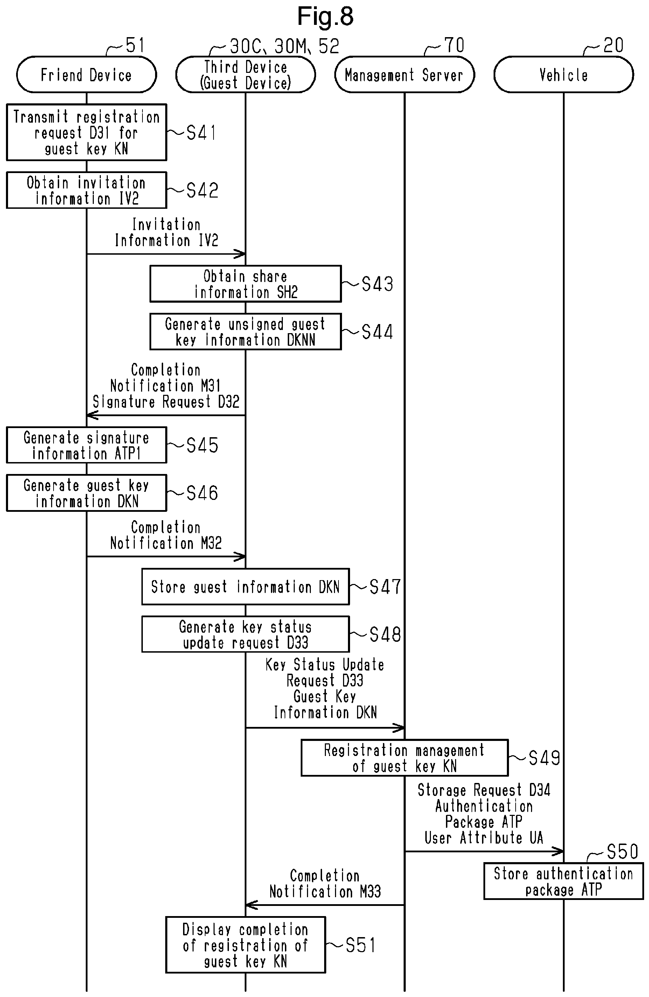

As shown in Fig. 8, the management system 10 executes a series of processes in order to register the guest key KN. The following describes an example of registering the guest key KF to the third device 30C, which does not store the guest key information DKN, through this series of processes.

When an operation for requesting the registration of the guest key KN is performed in the friend device 51, the friend device 51 first executes the process of step S41. In step S41, the friend device 51 transmits a registration request D31 for the guest key KN to the relay server (not shown). Thereafter, the friend device 51 advances the process to step S42.

In step S42, the friend device 51 obtains invitation information IV2 for sharing a digital key from the relay server. The invitation information IV2 is, for example, a URL link. The URL link contains share information SH2 necessary to share the digital key. Thereafter, the friend device 51 transmits the invitation information IV2 to the third device 30C.

Thereafter, upon receiving the invitation information IV2, the third device 30C executes the process of step S43. In step S43, the third device 30C obtains the share information SH2 based on the invitation information IV2. Specifically, the third device 30C downloads the share information SH2 from the URL link.

The share information SH2 includes, for example, the shareable key structure information STS, the password information ATP2, the validity start time information ATP3, the validity end time information ATP4, and the name information ATP5. The validity start time information ATP3, the validity end time information ATP4, and the name information ATP5 are configured by the friend device 51. Thereafter, the third device 30C advances the process to step S44.

In step S44, the third device 30C generates unsigned guest key information DKNN using the share information SH2. The unsigned guest key information DKNN is guest key information DKN that does not have the signature information ATP1. The unsigned guest key information DKNN includes the obtained share information SH2. Subsequently, the third device 30C transmits a completion notification M31 to the friend device 51, indicating that the upload of the generated unsigned guest key information DKNN to the URL link has been completed. The third device 30C also transmits a signature request D32 to the friend device 51.

Subsequently, the friend device 51 receives the completion notification M31 and the signature request D32 from the third device 30C. Upon receiving the completion notification M31, the friend device 51 obtains the unsigned guest key information DKNN. Upon receiving the signature request D32, the friend device 51 is operated to execute the process of step S45.

In step S45, the friend device 51 generates the signature information ATP1. Specifically, the friend device 51 causes the HMI 32 to present the unsigned guest key information DKNN that has been obtained, and accepts an operation indicating that the user of the friend device 51 has agreed to the registration of the guest key KN. Upon receiving the operation, the friend device 51 generates the signature information ATP1 based on the operation. Thereafter, the friend device 51 advances the process to step S46.

In step S46, the friend device 51 adds the signature information ATP1 to the unsigned guest key information DKNN. The friend device 51 thus generates the guest key information DKN. Thereafter, the friend device 51 uploads the generated guest key information DKN to the URL link, which is the invitation information IV2. Then, the friend device 51 transmits, to the third device 30C, a completion notification M32 indicating that uploading of the completed guest key information DKN to the URL link has been completed.

Thereafter, the third device 30C obtains the completion notification M32. Then, the third device 30C executes the process of step S47. In step S47, the third device 30C downloads and stores the guest key information DKN. As a result, the third device 30C is configured as the guest device 52. Thereafter, the third device 30C advances the process to step S47.

In step S48, the third device 30C generates a key status update request D33 for the guest key KN. The third device 30C transmits the guest key information DKN, the key status update request D33 for the guest key KN, and information indicating the user attribute UA of the third device 30C to the management server 70. In the example shown in Fig. 8, the user attribute UA of the third device 30C does not indicate the specific business legal person.

Thereafter, upon receiving the key status update request D33 for the guest key KN, the management server 70 executes the process of step S49. In step S49, the management server 70 performs registration management of the guest key KN.

Specifically, the management server 70 checks that the guest key KN targeted by the key status update request D33 is not listed in the revocation list. If the guest key KN is listed in the revocation list, the management server 70 transmits a notification to the third device 30C indicating that it cannot respond to the key status update request D33.

On the other hand, in a case in which the guest key KN is not listed in the revocation list, the management server 70 registers the guest key KN, which is a target of the key status update request D33, in the database DB. Specifically, the management server 70 stores the fact that the device 30 registered as the guest device 52 is the third device 30C in the data DA of the vehicles 20 in the database DB. The management server 70 stores the relationship between the third device 30C and the friend device 51 by referencing the obtained guest key information DKN. Specifically, the management server 70 stores the fact that the third device 30C is the device 30 having the guest key KN registered in response to the registration request D31 from the second device 30B. The management server 70 stores, in the database DB, the fact that the user attribute UA of the third device 30C is not the specific business legal person as the data DA of the vehicle 20.

Subsequently, the management server 70 transmits, to the vehicle 20, the authentication package ATP, which is part of the guest key information DKN, along with a storage request D34, which requests the storage of the authentication package ATP. That is, the management server 70 transmits the device public key information ST6, which indicates the device public key PKD of the guest device 52, to the vehicle 20. The management server 70 notifies the vehicle 20 that the device public key PKD has been signed by the friend device 51.

Thereafter, upon receiving the authentication package ATP and the storage request D34, the vehicle 20 executes the process of step S50. In step S50, the vehicle 20 stores the received authentication package ATP. The authentication package ATP is the authentication information AT for authenticating the guest key KN.

After completing the registration management, the management server 70 transmits a completion notification M33 of the key status update to the second device 30B.

Thereafter, upon receiving the completion notification M33 of the key status update, the second device 30B executes the process of step S51. In the process of step S51, the third device 30C presents information indicating completion of the registration of the guest key KN on the HMI 32. For example, the third device 30C displays an image indicating the completion of the registration of the guest key KN on the HMI 32. As a result, the management system 10 terminates the series of processes for registering the guest key KN.

### Device That is a Prescribed Server

Next, a series of processes for registering digital keys when the device 30 is the prescribed server 30N will be described.

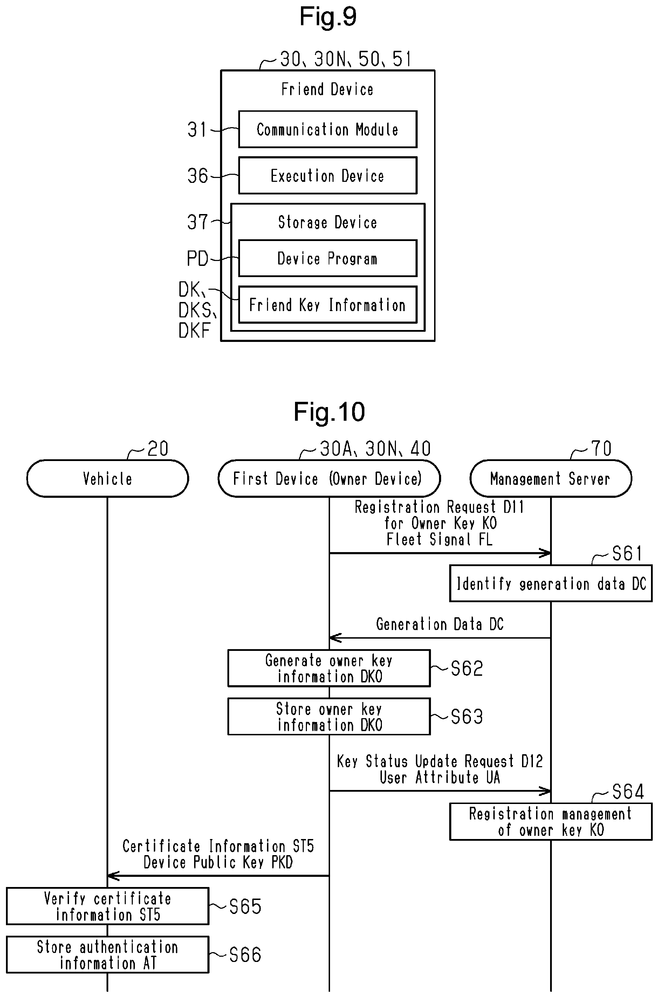

As shown in Fig. 9, the prescribed server 30N includes a communication module 31, an execution device 36, and a storage device 37. In other words, the prescribed server 30N does not include an HMI 32, a BLE module 33, a UWB module 34, or an NFC module 35. Therefore, the prescribed server 30N does not perform short-range wireless communication with the vehicle 20.

### Registration of the Owner Key in the Prescribed Server

As shown in Fig. 10, the management system 10 executes a series of processes in order to register the owner key KO in the prescribed server 30N. When a specific operation is performed, the first device 30A transmits a registration request D11 for the owner key KO and a fleet signal FL to the management server 70. Upon receiving the registration request D11 for the owner key KO and the fleet signal FL, the management server 70 executes the process of step S61. The fleet signal FL is a signal that indicates that there is a request to register a digital key from the device 30, which is the prescribed server 30N.

In step S61, the management server 70 identifies the generation data DC for generating the owner key KO. The generation data DC includes owner key information DKO. Upon receiving the fleet signal FL, the management server 70 identifies the generation data DC for generating the owner key KO of the target vehicle 20 among the generation data DC for the multiple vehicles 20 stored in advance. The management server 70 obtains the generation data DC for generating the digital key for the target vehicle 20 from an external server when the user of the first device 30A, for example, enters into a contract to use the prescribed server 30N as the first device 30A. Accordingly, the management server 70 stores in advance the generation data DC used to generate the digital key for the target vehicle 20. The generation data DC for generating digital keys includes the generation data DC for generating each of the owner key KO and the shareable key KS. The management server 70 then transmits the identified generation data DC to the first device 30A.

Thereafter, upon receiving the generation data DC, the first device 30A executes the process of step S62. In step S62, the first device 30A generates the owner key information DKO using the generation data DC. Thereafter, the first device 30A advances the process to step S63.

In step S63, the first device 30A stores the owner key information DKO. Thus, the first device 30A is configured as the owner device 40. Thereafter, the first device 30A transmits the key status update request D12 for the owner key KO and information indicating the user attribute UA of the first device 30A to the management server 70. In the example shown in Fig. 10, the user attribute UA of the first device 30A indicates the specific business legal person.

Thereafter, upon receiving the key status update request D12, the management server 70 executes the process of step S64. In step S64, the management server 70 performs registration management of the owner key KO. Specifically, the management server 70 stores the fact that the device 30 to which the owner key KO is registered is the first device 30A as the data DA of the vehicle 20 in the database DB. The management server 70 stores the fact that the user attribute UA of the first device 30A is the specific business legal person as the data DA of the vehicle 20 in the database DB. Subsequently, the management server 70 transmits, to the vehicle 20, the certificate information ST5 related to the owner key KO and the device public key information ST6 indicating the device public key PKD.

Thereafter, upon receiving the certificate information ST5 and the device public key information ST6, the vehicle 20 executes the process of step S65. In step S65, the vehicle 20 verifies the certificate information ST5. When the verification of the certificate information ST5 is completed, the vehicle 20 executes the process of step S66.

In step S66, the vehicle 20 stores the device public key information ST6 as the authentication information AT. As a result, the management system 10 completes the series of processes for registering the owner key KO for the device 30 that is the prescribed server 30N.

### Registration of the Guest Key in the Prescribed Server

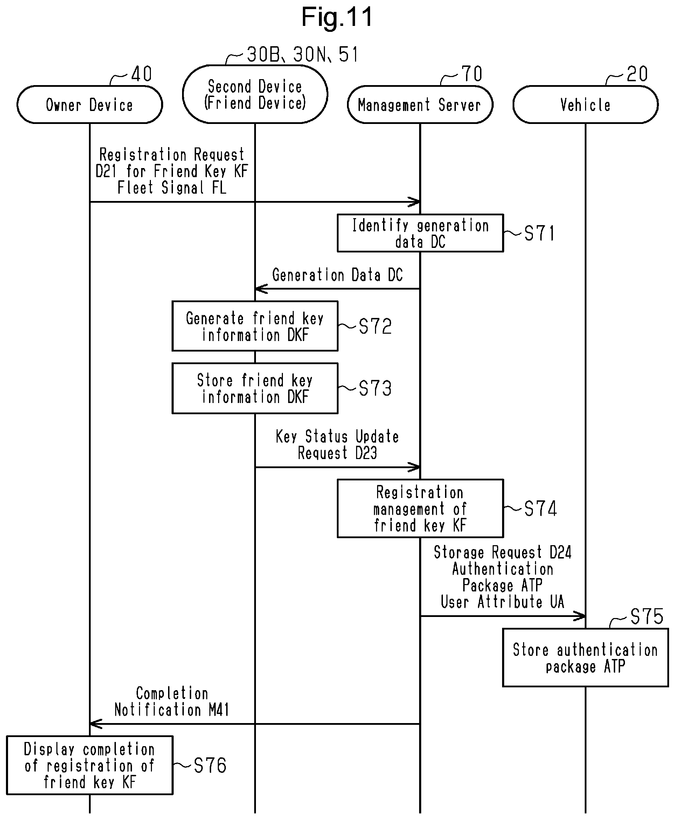

As shown in Fig. 11, the management system 10 executes a series of processes in order to register the friend key KF in the prescribed server 30N. When a prescribed operation is performed, the owner device 40 transmits a registration request D21 for the friend key KF and a fleet signal FL to the management server 70. Upon receiving the registration request D21 for the friend key KF and the fleet signal FL from the owner device 40, the management server 70 executes the process of step S71.

In step S71, the management server 70 identifies the generation data DC for generating the friend key KF. The generation data DC includes the friend key information DKF. Upon receiving the fleet signal FL, the management server 70 identifies the generation data DC for generating the friend key KF of the target vehicle 20 among the generation data DC for the multiple vehicles 20 stored in advance. The management server 70 then transmits the identified generation data DC to the second device 30B.

Thereafter, upon receiving the generation data DC, the second device 30B executes the process of step S72. In step S72, the second device 30B generates the owner key information DKF using the generation data DC. Thereafter, the second device 30B advances the process to step S73.

In step S73, the second device 30B stores the friend key information DKF. Thus, the second device 30B is configured as the friend device 51. Thereafter, the second device 30B transmits the key status update request D23 for the friend key KF and information indicating the user attribute UA of the second device 30B to the management server 70. In the example shown in Fig. 11, the user attribute UA of the second device 30B indicates the specific business legal person.

Thereafter, upon receiving the key status update request D23, the management server 70 executes the process of step S74. In step S74, the management server 70 performs registration management of the friend key KF. Specifically, the management server 70 stores the fact that the device 30 to which the friend key KF is registered is the second device 30B as the data DA of the vehicle 20 in the database DB. The management server 70 stores, as the data DA, information indicating that the second device 30B has been registered based on the registration request from the first device 30A, that is, information indicating the relationship between the second device 30B and the first device 30A. Furthermore, the management server 70 stores the fact that the user attribute UA of the second device 30B indicates the specific business legal person. Thereafter, the management server 70 transmits the storage request D24 and the authentication package ATP to the vehicle 20.

Thereafter, upon receiving the storage request D24, the management server 70 executes the process of step S75. In step S75, the management server 70 stores the authentication package ATP as the authentication information AT in accordance with the storage request D24.

After transmitting the storage request D24 and the authentication package ATP to the vehicle 20, the management server 70 transmits a completion notification M41 to the owner device 40. The completion notification M41 is a notification indicating that the registration of the friend key KF has been completed.

Thereafter, upon receiving the completion notification M41, the owner device 40 executes the process of step S76. In step S76, the owner device 40 displays the completion of the registration of the friend key KF on HMI 32. As a result, the management system 10 completes the series of processes for registering the friend key KF for the device 30 that is the prescribed server 30N.

### Deletion Control of the Guest Key

Next, deletion control including a series of processes for deleting the guest key KN in the management system 10 will be described. The deletion control performed by the management server 70 includes pending deletion determination, which will be discussed below, transmission of a deletion request D42, transmission of a deletion request D43, and updating of the database DB. In the present embodiment, the management server 70 performs the deletion control to determine whether to apply a prescribed condition RC to the deletion of the target digital key, and to set the target digital key to an unusable state in accordance with the determination result.

The following describes the overall process from a state in which the guest key KN key is registered to a state in which the guest key KN is no longer registered. In the following description, processes executed by the execution device 27 are described as processes executed by the vehicle 20. The processes executed by the execution device 36 will be described as processes executed by the device 30. The processes executed by the execution device 71 will be described as processes executed by the management server 70.

### Deletion of the Guest Key in Response to a Deletion Request from the Friend Device

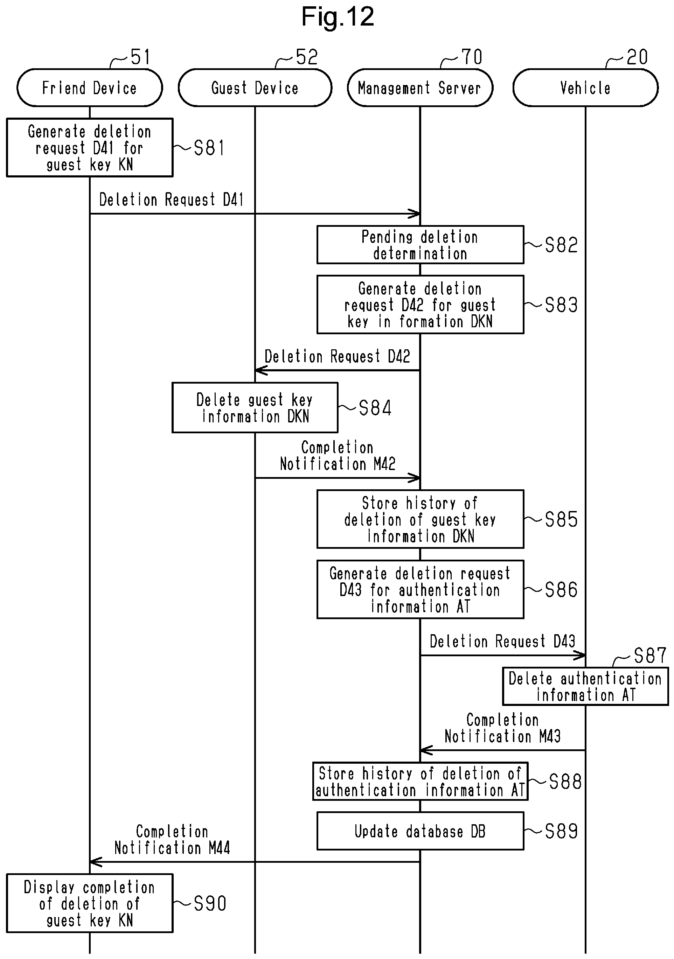

As shown in Fig. 12, the management system 10 executes a series of processes for deleting the guest key KN based on a deletion request D41 from the friend device 51, which is the prescribed server 30N. In the present embodiment, the server program PS causes the management server 70, which is a computer, to perform the deletion control.

When an operation for requesting the deletion of the guest key KN is performed in the friend device 51, the friend device 51 first executes the process of step S81. In step S81, the friend device 51 generates the deletion request D41 for deleting the guest key KN.

The deletion request D41 includes a signal for requesting deletion of the guest key KN and digital key identification information ST3 indicating the guest key KN. Then, the friend device 51 transmits the deletion request D41 for the guest key KN to the management server 70.

Thereafter, upon receiving the deletion request D41 for the guest key KN, the management server 70 executes the process of step S82. In step S82, the management server 70 performs pending deletion determination. The pending deletion determination is a process of determining whether the state of the guest key KN for which the deletion request D41 has been made is to be set to a pending deletion state. The pending deletion state is a state after a request to delete the target shareable key KS is obtained and when a prescribed condition RC defined in advance is not yet met.

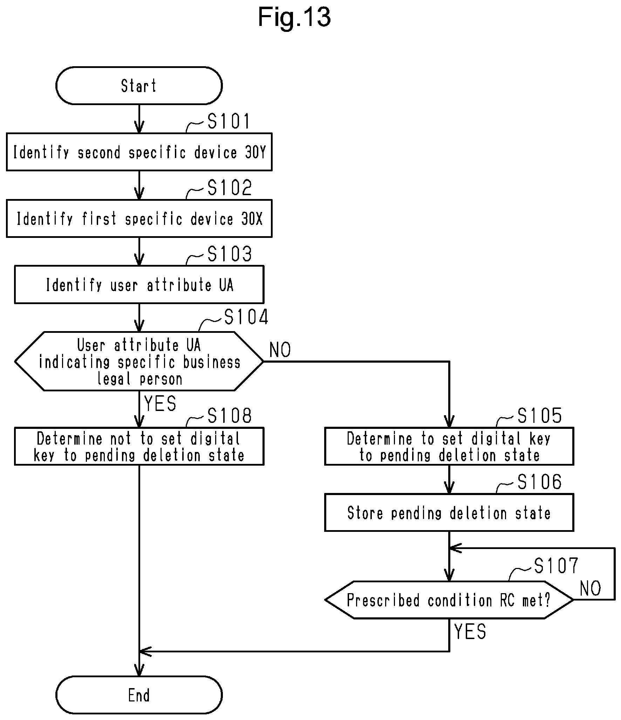

As shown in Fig. 13, when the management server 70 starts the pending deletion determination, the management server 70 first executes the process of step S101. In step S101, the management server 70 identifies a second specific device 30Y. The second specific device 30Y is a device 30 that stores the shareable key information DKS indicating the shareable key KS to be deleted. In the present embodiment, the shareable key KS to be deleted is the target digital key, and the second specific device 30Y is the target device.

Specifically, the management server 70 identifies the second specific device 30Y by referencing the digital key identification information ST3 included in the deletion request D41 and the data DA of the target vehicle 20 in the database DB. For example, in the example shown in Fig. 4, when the device 30 to which the guest key KN indicated by the digital key identification information ST3 is registered is the third device 30C, the management server 70 identifies the second specific device 30Y as the third device 30C. Thereafter, the management server 70 advances the process to step S102.

As shown in Fig. 13, in step S102, the management server 70 identifies the first specific device 30X, which is an involved device. The first specific device 30X is the device 30 that is the transmission source of the request to register the shareable key KS to be deleted. In the present embodiment, the first specific device 30X is the involved device. The involved device is the device 30 to which the digital key directly involved in the registration of the shareable key KS to be deleted is registered.

Specifically, the management server 70 references the database DB to identify, as the first specific device 30X, the device 30 that is the transmission source of the request for registering the second specific device 30Y. For example, in the example shown in Fig. 4, when the second specific device 30Y is the third device 30C, the management server 70 identifies the first specific device 30X as the second device 30B. Specifically, the management server 70 stores, as part of the data DA of the vehicle 20, the relationship between the third device 30C and the second device 30B, indicating that the third device 30C was registered based on a registration request from the second device 30B. Therefore, by referencing this relationship, the management server 70 identifies the first specific device 30X as the second device 30B.

The shareable key KS to be deleted is the second digital key, and the digital key indicated by the key information DK stored in the device 30 that is the transmission source of the request to register the shareable key KS to be deleted is the first digital key. In the present embodiment, the first digital key is a digital key registered in the first specific device 30X. The second digital key is a digital key registered in the second specific device 30Y based on the request for registration from the first specific device 30X.

That is, the device 30 to which the second digital key is registered is the second specific device 30Y, and the device 30 to which the first digital key is registered is the first specific device 30X. Thereafter, the management server 70 advances the process to step S103.

As shown in Fig. 13, in step S103, the management server 70 identifies the user attribute UA of the first specific device 30X. Specifically, the management server 70 identifies the user attribute UA of the first specific device 30X by referencing the data DA of the target vehicle 20 in the database DB. For example, when the first specific device 30X is the second device 30B, the user attribute UA of the first specific device 30X indicates the specific business legal person. Thereafter, the management server 70 advances the process to step S104.

In step S104, the management server 70 determines whether the user attribute UA of the first specific device 30X indicates the specific business legal person.

When the user attribute UA of the first specific device 30X does not indicate the specific business legal person (S104: NO), the management server 70 advances the process to step S105.

In step S105, the management server 70 determines to set the state of the digital key to be deleted to a pending deletion state through the pending deletion determination. That is, the management server 70 determines to apply the prescribed condition RC to the deletion of the target digital key to be deleted. Thereafter, the management server 70 advances the process to step S106.

In step S106, the management server 70 sets the state of the digital key to be deleted in the database DB to the pending deletion state. The pending deletion state is a state in which the deletion request D41 is received but the execution of the deletion is still suspended. Thereafter, the management server 70 advances the process to step S107.

In step S107, the management server 70 determines whether the prescribed condition RC, which is determined in advance, is met. The prescribed condition RC is a condition necessary for starting deletion after the deletion request D41 is received. The prescribed condition RC is determined in advance. The prescribed condition RC is, for example, that a predetermined pending deletion period has elapsed since the deletion request D41 is received. When determining that the prescribed condition RC is not met (S107: NO), the management server 70 repeats the process of step S107. When determining that the prescribed condition RC is met (S107: YES), the management server 70 terminates the current pending deletion determination.

When the user attribute UA of the first specific device 30X indicates the specific business legal person (S104: YES), the management server 70 advances the process to step S108.

In step S108, the management server 70 determines not to set the state of the digital key to be deleted to a pending deletion state through the pending deletion determination. That is, the management server 70 determines not to apply the prescribed condition RC to the deletion of the target digital key to be deleted. Thereafter, the management server 70 terminates the current pending deletion determination. Therefore, the management server 70 terminates the pending deletion determination regardless of whether the prescribed condition RC is met.

As shown in Fig. 12, after terminating the pending deletion determination, the management server 70 advances the process to step S83. In step S83, the management server 70 generates a deletion request D42 for the guest key information DKN indicating the second digital key to be deleted. Then, the management server 70 transmits the deletion request D42 to the guest device 52, which is the second specific device 30Y. Therefore, after the management server 70 makes an affirmative determination in the pending deletion determination, the management server 70 transmits the deletion request D42 to the second specific device 30Y when the prescribed condition RC is met, thereby setting the second digital key to be deleted to an unusable state. In contrast, after the management server 70 makes a negative determination in the pending deletion determination, the management server 70 transmits the deletion request D42 to the second specific device 30Y regardless of the prescribed condition RC, thereby setting the second digital key to be deleted to an unusable state. That is, the management server 70 sets the second digital key to an unusable state in accordance with the result of the pending deletion determination.

Thereafter, upon receiving the deletion request D42, the guest device 52, which is the second specific device 30Y, executes the process of step S84. In step S84, the guest device 52, which is the second specific device 30Y, deletes the guest key information DKN in accordance with the deletion request D42. In other words, the second specific device 30Y deletes the key information DK indicating the second digital key in accordance with the deletion request D42. Then, the guest device 52, which is the second specific device 30Y, transmits, to the management server 70, a deletion completion notification M42 indicating that the deletion in accordance with the deletion request D42 has been completed.

Thereafter, upon receiving the completion notification M42, the management server 70 executes the process of step S85. In step S85, the management server 70 stores a history of deletion of the guest key information DKN in the guest device 52, which is the second specific device 30Y. Thereafter, the management server 70 advances the process to step S86.

In step S86, the management server 70 generates a deletion request D43 for the authentication information AT. The deletion request D43 for the authentication information AT indicates a request to delete the authentication information AT for authenticating the guest key KN that is the target of the deletion request D41, specifically the authentication information AT for authenticating the second digital key. Then, the management server 70 transmits the deletion request D43 to the vehicle 20.

Thereafter, upon receiving the deletion request D43, the vehicle 20 executes the process of step S87. In step S87, in accordance with the deletion request D43, the vehicle 20 deletes the authentication information AT for authenticating the second digital key, which is the guest key KN that is the target of the deletion request D41. That is, the vehicle 20 deletes the authentication package ATP of the guest key KN, which is the second digital key. Thereafter, the vehicle 20 transmits, to the management server 70, a completion notification M43 indicating that the deletion of the authentication information AT in accordance with the deletion request D43 has been completed.

Upon receiving the completion notification M43, the management server 70 executes the process of step S88. In step S71, the management server 70 stores a history of deletion of the authentication information AT for authenticating the guest key KN to be deleted in the current series of deletion processes in the vehicle 20. Thereafter, the management server 70 advances the process to step S89.

In step S89, the management server 70 updates the database DB. Specifically, the management server 70 deletes the guest device 52 to which the guest key KN to be deleted in the current series of processes is registered, from the data DA of the vehicle 20 in the database DB. In other words, the management server 70 deletes the second specific device 30Y to which the second digital key is registered from the data DA of the vehicle 20 in the database DB. Thereafter, the management server 70 transmits, to the friend device 51, a completion notification M44 indicating that a series of deletions of the guest key KN in accordance with the deletion request D41 has been completed.

Thereafter, upon receiving the completion notification M44, the friend device 51 executes the process of step S90. In step S90, the friend device 51 causes the HMI 32 to present information indicating that deletion of the guest key KN, which is the target of the deletion request D41, has been completed. For example, the friend device 51 causes the HMI 32 to display an image indicating the completion of the deletion of the guest key KN. Thereafter, the management system 10 terminates the current series of processes for deleting the guest key KN.

### Deletion of the Guest Key through Deletion Operation on the Guest Device

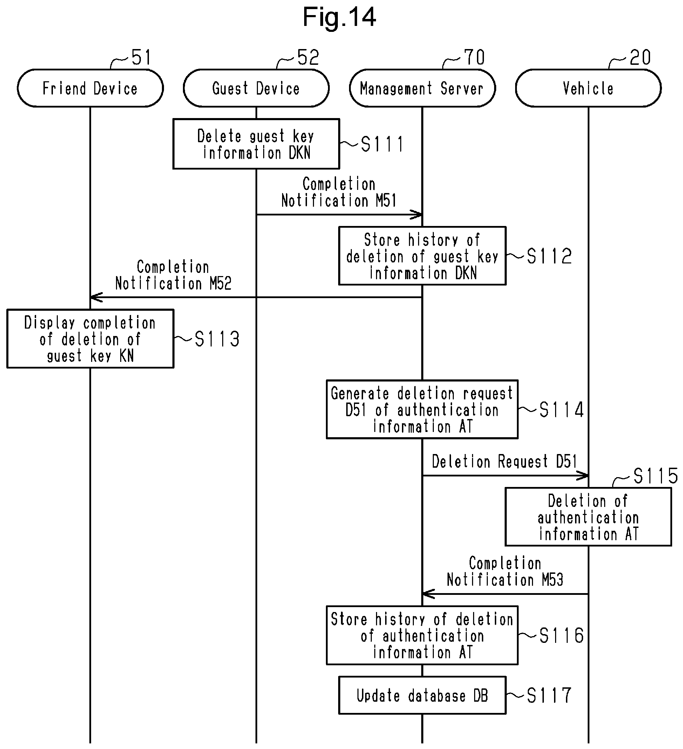

As shown in Fig. 14, the management system 10 executes a series of processes for deleting the guest key KN indicated by the guest key information DKN stored in the guest device 52 in response to a deletion operation on the guest device 52.

When a prescribed operation for requesting deletion of the guest key KN is performed on the guest device 52, the guest device 52 first executes the process of step S111. In step S111, the guest device 52 deletes the guest key information DKN in accordance with a prescribed operation. Thereafter, the guest device 52 transmits, to the management server 70, a completion notification M51 indicating that deletion of the guest key information DKN has been completed.

Thereafter, upon receiving the completion notification M51, the management server 70 executes the process of step S112. In step S112, the management server 70 stores a history of deletion of the guest key information DKN in the guest device 52. Thereafter, the management server 70 transmits, to the friend device 51, a completion notification M52 indicating that the deletion of the guest key information DKN has been completed.

Thereafter, upon receiving the completion notification M52, the friend device 51 executes the process of step S113. In step S113, the friend device 51 causes the HMI 32 to present information indicating that deletion of the guest key information DKN of the guest device 52 has been completed. For example, the friend device 51 causes the HMI 32 to display an image indicating the completion of the deletion of the guest key KN.

After the process of step S112, the management server 70 executes the process of step S114. In step S114, the management server 70 generates a deletion request D51 for deleting the authentication information AT for authenticating the guest key information DKN that has been deleted by the completion notification M51. Then, the management server 70 transmits the deletion request D51 to the vehicle 20.

Thereafter, upon receiving the deletion request D51, the vehicle 20 executes the process of step S115. In step S115, in accordance with the deletion request D51, the vehicle 20 deletes the authentication information AT for authenticating the guest key KN that has been deleted in step S111. The vehicle 20 then transmits, to the management server 70, a completion notification M53 indicating that the deletion of the authentication information AT in accordance with the deletion request D51 has been completed.

Thereafter, upon receiving the completion notification M53, the management server 70 executes the process of step S116. In step S116, the management server 70 stores a history of deletion of the authentication information AT for authenticating the guest key KN that has been deleted in step S111. Thereafter, the management server 70 advances the process to step S117.

In step S117, the management server 70 updates the database DB. Specifically, the management server 70 deletes the guest device 52 that has the guest key KN to be deleted in the current series of processes, from the data DA of the vehicle 20 in the database DB. As a result, the management system 10 terminates the current series of processes for deleting the guest key KN. That is, when the guest key KN is deleted in response to a deletion operation on the guest device 52 storing the guest key information DKN indicating the guest key KN to be deleted, the management server 70 does not perform the pending deletion determination.

### Operation of the Embodiment

In the above-described embodiment, in a case in which the user attribute UA of the first specific device 30X is not the specific business legal person, there is a high probability that the vehicle 20 is used by the user of the first specific device 30X. On the other hand, in a case in which the user attribute UA of the first specific device 30X indicates the specific business legal person, there is a high probability that the user of the first specific device 30X does not directly use the vehicle 20 and lends the vehicle 20 to another user allowing that user to use the vehicle 20.

### Advantages of the Embodiment

(1) The management server 70 determines whether to apply the prescribed condition RC to the deletion of the digital key to be deleted based on the user attribute UA of the involved device, to which the digital key involved in the registration of the digital key to be deleted is registered. Then, the management server 70 sets the digital key to be deleted to an unusable state in accordance with the result of the determination. Therefore, the management server 70 is capable of determining whether to apply the prescribed condition RC for setting the digital key to be deleted to an unusable state, in accordance with the difference in the way the vehicle 20 is used based on the user attribute UA of the involved device.
(2) The digital key to be deleted is the second digital key. The digital key involved in the registration of the second digital key, which is the digital key to be deleted, is the first digital key. Therefore, the management server 70 determines whether to set the second digital key to the pending deletion state in accordance with the user attribute UA of the first specific device 30X. That is, the management server 70 determines whether to apply the prescribed condition RC in order to set the digital key to be deleted to an unusable state based on the user attribute UA of the device 30 to which the digital key directly involved in the registration of the digital key to be deleted is registered. Accordingly, the management server 70 is capable of determining whether to apply the prescribed condition RC based on the user attribute UA of a device that is assumed to have a high degree of involvement among the multiple digital keys involved in the registration of the digital key to be deleted.
(3) In the deletion control, the management server 70 causes the second specific device 30Y to delete the key information DK indicating the second digital key stored in the second specific device 30Y, thereby setting the second digital key to an unusable state. Therefore, by controlling the second specific device 30Y, the management server 70 is capable of managing the second digital key in a state in which the second digital key cannot be used in the second specific device 30Y.
(4) In the deletion control, the management server 70 transmits the deletion request D42 for the key information DK indicating the second digital key to the second specific device 30Y, thereby causing the second specific device 30Y to delete the key information DK indicating the second digital key. Therefore, when the second specific device 30Y receives the deletion request D42, the management server 70 is capable of deleting the key information DK indicating the second digital key.
(5) In the deletion control, the management server 70 causes the vehicle management device 26 to delete the authentication information AT of the second digital key stored in the vehicle management device 26, thereby setting the second digital key to an unusable state. Therefore, the management server 70 is capable of managing the second digital key to be in an unusable state by controlling the vehicle management device 26.
(6) In the deletion control, the management server 70 transmits the deletion request D43 for the authentication information AT of the second digital key to the vehicle 20 to cause the vehicle management device 26 to delete the authentication information AT of the second digital key. When the authentication information AT is deleted from the vehicle management device 26, attempting to use the second digital key will result in the second digital key not being authenticated, so that the second digital key becomes unusable. Therefore, the management server 70 is capable of setting the second digital key to an unusable state by transmitting the deletion request D43 to the vehicle 20.
(7) When the user attribute UA of the first specific device 30X indicates the specific business legal person, there is a high probability that the first digital key will not be used for boarding the vehicle 20 or operating the vehicle 20. In this case, the second digital key, which is registered based on a registration request from the first specific device 30X, is likely to be a shareable key KS issued by the user of the first specific device 30X for personal lending to authorize the use of the vehicle 20. In such a case, the user of the second specific device 30Y changes for each predetermined period, as in the case of rental car services or car-sharing services, and accordingly, the device 30 serving as the second specific device 30Y also changes for each such period. If the second digital key is set to an unusable state when the prescribed condition RC is met, the second digital key may continue to be used by the device 30 that served as the second specific device 30Y, resulting in a risk that the next user may not be able to promptly use the vehicle 20.
   In this regard, when the user attribute UA of the first specific device 30X indicates that the specific business legal person, the management server 70 makes an affirmative determination in step S104 and determines not to set the second digital key to the pending deletion state in the process of step S108. In this case, the management server 70 sets the second digital key to an unusable state regardless of the prescribed condition RC after obtaining the deletion request D41 for the second digital key. Therefore, the management server 70 is capable of preventing the vehicle 20 from being continuously used for an excessive period by the device 30 that has been the second specific device 30Y. As a result, the management server 70 prevents users other than the user of the second specific device 30Y from being unable to use the vehicle 20.
(8) When the user attribute UA of the first specific device 30X does not indicate the specific business legal person, there is a low probability that the first digital key will not be used for boarding the vehicle 20 or operating the vehicle 20. In this case, the second digital key, which is registered based on a registration request from the first specific device 30X, is likely to be a shareable key KS issued by the user of the first specific device 30X for personal lending to authorize the use of the vehicle 20. In this case, the user of the second specific device 30Y can board and activate the vehicle 20 without a predetermined period, as is typical with rental car services and car-sharing services. If the second digital key is set to an unusable state regardless of the prescribed condition RC, the vehicle 20 may suddenly become unusable with the device 30 that has been the second specific device 30Y.
   In this regard, when the user attribute UA of the first specific device 30X does not indicates the specific business legal person, the management server 70 makes a negative determination in step S104 and determines to set the second digital key to the pending deletion state in the process of step S105. In this case, the management server 70 sets the second digital key to an unusable state when the prescribed condition RC is met after obtaining the deletion request D41 for the second digital key. Therefore, the management server 70 prevents a condition in which the use of the vehicle 20 by the second specific device 30Y becomes suddenly unavailable.
(9) The management server 70 performs the pending deletion determination when obtaining the deletion request D41 for the second digital key. Therefore, the management server 70 performs the pending deletion determination based on the user attribute UA of the first specific device 30X when it becomes necessary to perform the pending deletion determination. Therefore, the management server 70 is capable of performing the pending deletion determination when the determination result is necessary.

### Other Embodiments

The above-described embodiment may be modified as follows. The above-described embodiment and the following modifications can be combined if the combined modifications remain technically consistent with each other.

The vehicle 20 may lack at least one of the BLE module 23, the UWB module 24, and the NFC module 25. The vehicle 20 is capable of performing short-range wireless communication with the device 30 as long as the vehicle 20 includes at least one module. The vehicle 20 may include modules other than those listed above, provided that the module is capable of performing short-range wireless communication with the device 30.

The digital key-related aspects in the above-described embodiment need not conform to the CCC standard.

The vehicle management device 26 is not limited to the digital key ECU. The vehicle management device 26 may be, for example, a central ECU that integrally manages multiple ECUs included in the vehicle 20.

In the above-described embodiment, the management server 70 is provided with the execution device 71, which is processing circuitry including one or more processors that run computer programs (software) to execute various processes. However, the vehicle management device 26 may be provided with processing circuitry including one or more dedicated hardware circuits, such as application-specific integrated circuits (ASICs) that execute at least some of the processes. Alternatively, the management server 70 may be provided with processing circuitry including a combination of one or more processors and one or more dedicated hardware circuits. Each processor includes a CPU and memory such as RAM and ROM. The memory stores program codes or commands configured to cause the CPU to execute processes. The memory, namely, a computer-readable medium, includes any available medium that is accessible by a general-purpose or special-purpose computer. The same applies to the device 30 and the vehicle management device 26.

The multiple devices 30 may all be portable devices 30M. That is, the device types may all be portable devices 30M. The portable devices 30M may provide a rental car service or a car-sharing service.

The shareable device 50 has a function of receiving the shareable key KS as in the above-described embodiment. A device 30 that is capable of receiving a digital key, such as a shareable device 50, may be referred to as a receiver device.

A separate device server 60 does not necessarily need to be provided for each type of device 30. It is sufficient that the multiple devices 30 and the management server 70 wirelessly communicate with each other. The device server 60 may be omitted. It is sufficient that the multiple devices 30 and the management server 70 communicate directly via wireless communication.

The management server 70 may include multiple servers. For example, the management server 70 may include a server that stores the database DB and a server that executes a server program PS. In addition, for example, the management server 70 may include a server that communicates with the vehicles 20 and a server that communicates with the device server 60, and these servers may communicate with each other. Further, for example, when the type of the device 30 is a prescribed server 30N, the prescribed server 30N may be included in a server including the management server 70.

The management server 70 does not necessarily need to store the database DB. It is sufficient that the management server 70 manage at least a combination of the key information DK of the device 30 and the authentication information AT of the vehicle management device 26 for one digital key in the management system 10.

### Various Types of Information

The authentication information AT is not limited to the example of the above-described embodiment as long as it is information for authenticating digital keys when digital keys are used. For example, the authentication information AT may be a common key shared by the vehicle management device 26 and the device 30. Further, for example, the authentication information AT may be a shared secret key.

The configuration of the information included in the key information DK is not limited to the example of the above-described embodiment. For example, the owner key information DKO does not necessarily need to include the slot identification information ST4. Further, for example, the key information DK may include information indicating the type of the digital key. The type of the digital key is, for example, information indicating one of the owner key KO, the friend key KF, and the guest key KN.

The structure of the data DA in the database DB is not limited to the example of the above-described embodiment. The database DB may be modified as long as it includes information necessary for the management server 70 to perform management in the management system 10.

In the above-described embodiment, the digital keys are arranged in a hierarchy consisting of, in descending order, the owner key KO, the friend key KF, and the guest key KN, such that digital keys at higher hierarchical levels are assigned greater authority. However, the digital keys do not necessarily need to be configured such that higher hierarchical levels correspond to greater authority. For example, equal authority may be assigned to the three hierarchical levels: the owner key KO, the friend key KF, and the guest key KN.

In the database DB, the authority does not necessarily need to be uniformly determined in accordance with the type of the digital key, and may be set for each digital key. In the database DB, the authority does not necessarily need to be defined.

The information related to the digital keys stored in the vehicle management device 26 is not limited to the authentication information AT, and may be any information related to the digital keys. For example, the information related to digital keys may be information used to identify the digital keys.

The information related to the digital keys stored in the device 30 is not limited to the key information DK, and may be any information related to the digital key. For example, the information related to digital keys may be information used to identify the digital keys.

The information related to the digital key stored in the vehicle management device 26 may be different from the information related to the digital key stored in the device 30 as in the above-described embodiment, or may be the same.

### Series of Processes for Registering Digital Keys

In a case in which the owner device 40 is a portable device 30M, the series of processes for registering the owner key KO is not limited to those in the example of the above-described embodiment. For example, even if pairing through the process of step S12 is not performed, the owner device 40 may store the owner key information DKO by transmitting and receiving information such as the generation data DC between the vehicle 20 and the first device 30A via the management server 70. The series of processes for registering the owner key KO may be appropriately modified to align with the structure of the information included in the owner key information DKO and the structure of the information included in the authentication information AT.

When the owner device 40 is the prescribed server 30N, the series of processes for registering the owner key KO is not limited to the example in the above-described embodiment. For example, the management server 70 may receive the registration request D11 for the owner key KO and the fleet signal FL from a server different from the first device 30A.

When the friend device 51 is a portable device 30M, the series of processes for registering the friend key KF is not limited to the example in the above-described embodiment. For example, the management server 70 may update the database DB through the process of step S29 after transmitting the authentication package ATP and the storage request D24 to the vehicle 20. The series of processes for registering the friend key KF may be appropriately modified to align with the structure of the information included in the friend key information DKF and the structure of the information included in the authentication information AT.

When the friend device 51 is a portable device 30M, the series of processes for registering the friend key KF is not limited to the example in the above-described embodiment. For example, the management server 70 may generate the friend key information DKF.

When the friend device 51 is a portable device 30M, the series of processes for registering the guest key KN is not limited to the example in the above-described embodiment. The order of processes may differ from the series of processes for registering the friend key KF in the above-described embodiment. The series of processes for registering the guest key KN may be appropriately modified to align with the structure of the information included in the guest key information DKN and the structure of the information included in the authentication information AT.

The types of digital keys do not necessarily need to include the guest key KN. In other words, in the management system 10, the shareable key KS may be only the friend key KF.

The guest device 52 may be able to transmit a request to register a new guest key KN. In other words, the shareable device 50 may transmit a request to register a new guest key KN regardless of whether the shareable device 50 is the friend device 51 or the guest device 52. In this case, it is sufficient for the management system 10 to perform the registration for the new guest key KN using the series of processes shown in Fig. 7.

The device type of the guest devices 52 may be the prescribed server 30N. As in the above-described modification, when the guest device 52 is capable of transmitting a request to register a new guest key KN, the user of the guest device 52 can lend the vehicle 20 through services such as car rental and car-sharing. In this case, the device type of the guest device 52 may be the prescribed server 30N.

### Series of Processes for Deleting Digital Keys

As shown in Fig. 14, when the guest device 52 is deleted in response to operation of the guest device 52, the deletion request D41 for the guest key KN may be transmitted to the management server 70 before the completion notification M51 is transmitted to the management server 70. In this case, as in the flow shown in Fig. 12, upon receiving the deletion request D41, the management server 70 may transmit a request to delete the guest key information DKN to the guest device 52. Also, when the guest device 52 is deleted in response to operation of the guest device 52, the management server 70 may perform the pending deletion determination.

In a case in which the guest key KN is deleted in response to operation of the friend device 51, and in a case in which the guest key KN is deleted in response to operation of the guest device 52, a deletion request D41 may be sent to the management server 70.

The owner device 40 and the vehicle 20 may transmit the deletion request D41 for the guest key KN to the management server 70. Further, for example, the management server 70 may generate the deletion request D41 for the guest key KN when a prescribed condition is met.

In the above-described embodiment, the management server 70 determines whether the prescribed condition RC is met. However, the vehicle 20 or the guest device 52 may determine whether the prescribed condition RC is met. For example, if the prescribed condition RC is that the number of times the power source of the vehicle 20 is turned on reaches a specified count, it is preferable that the vehicle 20 determine whether the prescribed condition RC is met.

In the above-described embodiment, the involved device is the first specific device 30X, which is the device 30 to which the digital key directly involved in the registration of the digital key to be deleted has been registered. However, the present disclosure is not limited thereto. The involved device may be the device 30 to which the digital key indirectly related to the registration of the digital key to be deleted is registered. For example, in the case shown in Fig. 4, if the third key is the one to be deleted, the first device 30A, to which the first key is registered, may be preset as the involved device. That is, the management server 70 may determine whether to apply the prescribed condition RC to the deletion of the guest key KN based on the user attribute UA of the owner device 40.

When there are multiple digital keys involved in the registration of the digital key to be deleted, the user of the device 30, to which the digital key to be deleted is registered, may select in advance which digital key to associate with the involved device. For example, when the digital key to be deleted is registered, the device 30 to which the digital key to be deleted is registered may display a screen prompting the user to select, as the involved device, the device 30 to which one of the associated digital keys is registered.

### Point in Time of Determination of Pending Deletion State

The point in time at which the management server 70 performs the pending deletion determination is not limited to the time when the deletion request D41 for the second digital key is obtained. For example, the management server 70 may perform the pending deletion determination when registering the second digital key.

Specifically, after executing the process of step S74 shown in Fig. 11, the management server 70 may execute the processes of step S101 to step S105 and step S108. When executing the process of step S105, the management server 70 stores, in the database DB, information indicating that the second digital key is set to the pending deletion state. When executing the process of step S108, the management server 70 stores, in the database DB, information indicating that the second digital key is not set to the pending deletion state.

When the management server 70 obtains the deletion request D41 for the second digital key, if the database DB stores information indicating that the second digital key is set to the pending deletion state, the management server 70 may set the second digital key to an unusable state when the prescribed condition RC is met. On the other hand, when the management server 70 obtains the deletion request D41 for the second digital key, if the database DB stores information indicating that the second digital key is not set to the pending deletion state, the management server 70 may set the second digital key to an unusable state regardless of the prescribed condition RC.

In this manner, the management server 70 may determine whether to set the second digital key to the pending deletion state when the second digital key is registered. That is, the management server 70 may perform the pending deletion determination in advance before obtaining the deletion request D41 for the second digital key. Therefore, upon obtaining the deletion request D41 for the second digital key, the management server 70 may already have identified the result of the deletion request determination.

### User Attribute

In the above-described embodiment, the user attribute UA indicates whether the user is the specific business legal person. However, the user attribute UA is not limited thereto. For example, the user attribute UA may simply indicate whether the user is the specific business operator. In this case, it is sufficient that the management server 70 perform the pending deletion determination based on whether the user attribute UA of the first specific device 30X indicates the specific business operator.

Further, the user attribute UA may simply indicate whether the user is a legal person. In this case, it is sufficient that the management server 70 perform the pending deletion determination based on whether the user attribute of the first specific device 30X is a legal person.

Further, for example, the user attribute UA may indicate only whether the device type is the device 30 that performs short-range wireless communication. In this case, it is sufficient that the management server 70 perform the pending deletion determination based on whether the device type of the first specific device 30X is a device that performs short-range wireless communication.

At a minimum, it is sufficient that the management server 70 perform the pending deletion determination based on the user attribute UA of the first specific device 30X. Accordingly, the result of the pending deletion determination by the management server 70 may be the opposite of the result in the example described in the above-described embodiment.

The management server 70 may store the user attribute UA regardless of the information indicating the user attribute UA received from the device 30. For example, the management server 70 may determine the user attribute UA depending on whether the fleet signal FL is received from the same device 30 before performing the registration management. Specifically, in a case in which the fleet signal FL is received from the same device 30 before the registration management is performed, the management server 70 may determine that the user attribute UA of the device 30 indicates the specific business legal person. In a case in which the fleet signal FL is not received from the same device 30 before the registration management is performed, the management server 70 may determine that the user attribute UA of the device 30 is not the specific business legal person.

In the above-described embodiment, the management server 70 identifies the user attribute UA by referencing the database DB stored in the storage device 72, but may identify the user attribute UA without using the database DB. For example, when executing the process of step S103, the management server 70 may obtain information indicating the user attribute UA of the first specific device 30X from the first specific device 30X by communicating with the first specific device 30X. Then, the management server 70 may perform the pending deletion determination based on the obtained user attribute UA.

### Method for Setting the Second Digital Key to an Unusable State

The method by which the management server 70 sets the second digital key to an unusable state is not limited to the above-described embodiment. For example, the management server 70 may transmit a prohibition request for prohibiting the use of the authentication information AT of the second digital key to the vehicle management device 26, and the vehicle management device 26 that has received the prohibition request may prohibit the use of the authentication information AT of the second digital key.

The method by which the management server 70 causes the second specific device 30Y to delete the key information DK indicating the second digital key is not limited to transmitting the deletion request D42. For example, the management server 70 may periodically transmit a continuation request to cause the second specific device 30Y to continue storing the key information DK indicating the second digital key. In this case, by ceasing transmission of the continuation request, the management server 70 may cause the second specific device 30Y to delete the key information DK indicating the second digital key.

The management server 70 is not necessarily required to cause the second specific device 30Y to delete the key information DK indicating the second digital key. For example, the management server 70 may set the second digital key to an unusable state by simply causing the second specific device 30Y to delete the authentication information AT of the second digital key to be deleted.

The method by which the management server 70 causes the vehicle management device 26 to delete the authentication information AT of the second digital key is not limited to transmitting the deletion request D43. For example, the management server 70 may periodically transmit a continuation request to cause the vehicle management device 26 to continue storing the authentication information AT of the second digital key. In this case, by ceasing transmission of the continuation request, the management server 70 may cause the vehicle management device 26 to delete the authentication information AT of the second digital key.

The management server 70 is not necessarily required to cause the vehicle management device 26 to delete the authentication information AT of the second digital key. For example, the management server 70 may set the second digital key to an unusable state by simply causing the vehicle management device 26 to delete the key information DK indicating the second digital key to be deleted.

Various changes in form and details may be made to the examples above without departing from the spirit and scope of the claims and their equivalents. The examples are for the sake of description only, and not for purposes of limitation. Descriptions of features in each example are to be considered as being applicable to similar features or aspects in other examples. Suitable results may be achieved if sequences are performed in a different order, and/or if components in a described system, architecture, device, or circuitry are combined differently, and/or replaced or supplemented by other components or their equivalents. The scope of the disclosure is not defined by the detailed description, but by the claims and their equivalents. All variations within the scope of the claims and their equivalents are included in the disclosure.

## Claims

1. A management server (70) configured to manage multiple digital keys available for a vehicle (20), wherein
the multiple digital keys include a target digital key (KS) and one or more registration-involved digital keys that have been involved in registration of the target digital key (KS),
the multiple digital keys are respectively registered in multiple devices (30), the multiple devices (30) include an involved device (30X) to which a predetermined one of the registration-involved digital keys is registered, and
the management server (70) performs:
determining whether to apply a prescribed condition (RC) to deletion of the target digital key based on a user attribute (UA) of the involved device (30X); and
setting the target digital key to an unusable state in accordance with a result of the determination.

2. The management server (70) according to claim 1, wherein
the multiple digital keys include:
a first digital key registered in a first specific device (30X); and
a second digital key (30Y) registered in a second specific device based on a request for registration from the first specific device,
the target digital key (KS) is the second digital key, and
the registration-involved digital key is the first digital key.

3. The management server (70) according to claim 1 or 2, wherein
the multiple devices (30) include a target device (30X) to which the target digital key (KS) is registered, and
the management server (70) is configured to cause the target device (30X) to delete information (DK) related to the target digital key stored in the target device (30Y), thereby setting the target digital key (KS) to an unusable state.

4. The management server (70) according to claim 3, wherein the management server (70) is configured to cause the target device (30Y) to delete the information (DK) related to the target digital key (KS) by transmitting, to the target device (30Y), a request to delete the information (DK) related to the target digital key (KS).

5. The management server (70) according to any one of claims 1 to 4, wherein the management server (70) is configured to cause a vehicle management device (26) of the vehicle (20) to delete information (AT) related to the target digital key (KS) stored in the vehicle management device (26), thereby setting the target digital key (KS) to an unusable state.

6. The management server (70) according to claim 5, wherein the management server (70) is configured to cause the vehicle management device (26) to delete the information (AT) related to the target digital key (KS) by transmitting, to the vehicle (20), a request to delete the information (AT) related to the target digital key (KS).

7. The management server (70) according to any one of claims 1 to 6, wherein the management server (70) is configured to determine not to apply the prescribed condition (RC) to deletion of the target digital key (KS) when the user attribute (UA) of the involved device (30X) is a specific business operator lending the vehicle (20).

8. The management server (70) according to any one of claims 1 to 7, wherein the management server (70) is configured to determine to apply the prescribed condition (RC) to deletion of the target digital key (KS) when the user attribute (UA) of the involved device (30X) is not a specific business operator lending the vehicle (20).

9. The management server (70) according to any one of claims 1 to 7, wherein the management server (70) is configured to determine not to apply the prescribed condition (RC) to deletion of the target digital key (KS) when the user attribute (UA) of the involved device (30X) indicates a legal person.

10. The management server (70) according to any one of claims 1 to 7, and 9, wherein the management server (70) is configured to determine to apply the prescribed condition (RC) to deletion of the target digital key (KS) when the user attribute (UA) of the involved device (30X) is not a legal person.

11. The management server (70) according to any one of claims 1 to 10, wherein the management server (70) is configured to determine whether to apply the prescribed condition (RC) when obtaining a request (D41) to delete the target digital key (KS).

12. The management server (70) according to any one of claims 1 to 10, wherein
the management server (70) is configured to determine whether to apply the prescribed condition (RC) when registering the target digital key (KS), and
the management server (70) is configured to set the target digital key (KS) to an unusable state when obtaining a request (D41) to delete the target digital key (KS).

13. A management method performed by a management server (70) configured to manage multiple digital keys available for a vehicle (20), wherein
the multiple digital keys include a target digital key (KS) and one or more registration-involved digital keys that have been involved in registration of the target digital key,
the multiple digital keys are respectively registered in multiple devices (30), and
the multiple devices (30) include an involved device (30X) to which a predetermined one of the registration-involved digital keys is registered,
the management method comprises:
determining whether to apply a prescribed condition (RC) to deletion of the target digital key (KS) based on a user attribute (UA) of the involved device (30X); and
setting the target digital key (KS) to an unusable state in accordance with a result of the determination.

14. A program (PS) executed by a management server (70) that is a computer configured to manage multiple digital keys available for a vehicle (20), wherein
the multiple digital keys include a target digital key (KS) and one or more registration-involved digital keys that have been involved in registration of the target digital key,
the multiple digital keys are respectively registered in multiple devices (30),
the multiple devices (30) include an involved device (30X) to which a predetermined one of the registration-involved digital keys is registered, and
the program (PS) is configured to cause the management server (70) to perform:
determining whether to apply a prescribed condition (RC) to deletion of the target digital key (KS) based on a user attribute (UA) of the involved device (30X); and
setting the target digital key (KS) to an unusable state in accordance with a result of the determination.
